(19) **Europäisches Patentamt / European Patent Office / Office européen des brevets**

(11) **EP 4 648 424 A1**

(12) **EUROPEAN PATENT APPLICATION**
published in accordance with Art. 153(4) EPC

(43) Date of publication:
**12.11.2025 Bulletin 2025/46**

(21) Application number: **24738739.2**

(22) Date of filing: **04.01.2024**

(51) International Patent Classification (IPC):
**H04N 19/86** (2014.01)   **H04N 19/82** (2014.01)
**H04N 19/513** (2014.01)   **H04N 19/105** (2014.01)
**H04N 19/176** (2014.01)

(52) Cooperative Patent Classification (CPC):
**H04N 19/105; H04N 19/176; H04N 19/513;**
**H04N 19/82; H04N 19/86**

(86) International application number:
**PCT/KR2024/000207**

(87) International publication number:
**WO 2024/147670 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.01.2023  KR 20230001020**

(71) Applicant: **LG Electronics Inc.**
**Yeongdeungpo-gu**
**Seoul 07336 (KR)**

(72) Inventors:
• **PARK, Naeri**
  **Seoul 06772 (KR)**
• **NAM, Junghak**
  **Seoul 06772 (KR)**
• **LIM, Jaehyun**
  **Seoul 06772 (KR)**
• **JANG, Hyeongmoon**
  **Seoul 06772 (KR)**
• **CHOI, Jangwon**
  **Seoul 06772 (KR)**
• **AHN, Yongjo**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **IMAGE ENCODING/DECODING METHOD AND DEVICE, AND RECORDING MEDIUM ON WHICH BITSTREAM IS STORED**

(57)   An image decoding/encoding method and device, according to the present disclosure, can determine a filter length of a deblocking filter applied to a block boundary between a first block and a second block in the current picture, determine a boundary strength of the deblocking filter, determine a deblocking filter having a predetermined type and strength on the basis of the filter length and the boundary strength, and apply the deblocking filter to the block boundary between the first block and the second block. Here, the filter length of the deblocking filter can be determined on the basis of whether multiple reference prediction is applied to the first block and/or the second block.

FIG.4

```
┌──────────────────────────────────┐
│   DETERMINE FILTER LENGTH        │ ~ S400
│   OF DEBLOCKING FILTER           │
└──────────────────────────────────┘
                 │
                 ▼
┌──────────────────────────────────┐
│   DETERMINE BOUNDARY STRENGTH    │ ~ S410
│   OF DEBLOCKING FILTER           │
└──────────────────────────────────┘
                 │
                 ▼
┌──────────────────────────────────┐
│   DETERMINE DEBLOCKING FILTER    │ ~ S420
└──────────────────────────────────┘
                 │
                 ▼
┌──────────────────────────────────┐
│   APPLY DEBLOCKING FILTER        │ ~ S430
└──────────────────────────────────┘
```

EP 4 648 424 A1

**Description**

[Technical Field]

The present disclosure relates to an image encoding/decoding method and apparatus, and a recording medium storing a bitstream.

[Background Art]

Recently, the demand for high-resolution and high-quality images such as HD (High Definition) images and UHD (Ultra High Definition) images has been increasing in various application fields, and accordingly, highly efficient image compression technologies are being discussed.

There are a variety of technologies such as inter-prediction technology that predicts a pixel value included in a current picture from a picture before or after a current picture with video compression technology, intra-prediction technology that predicts a pixel value included in a current picture by using pixel information in a current picture, entropy coding technology that allocates a short sign to a value with high appearance frequency and a long sign to a value with low appearance frequency, etc. and these image compression technologies may be used to effectively compress image data and transmit or store it.

[Disclosure]

[Technical Problem]

The present disclosure provides a method and device for determining a filter length of a deblocking filter.

The present disclosure provides a method and device for determining a boundary strength of a deblocking filter.

The present disclosure provides a method and device for deriving a variable for determining a deblocking filter.

[Technical Solution]

The image decoding method and device according to the present disclosure may determine a filter length of a deblocking filter applied to a block boundary between a first block and a second block in a current picture, determine a boundary strength of the deblocking filter, determine the deblocking filter having a predetermined type and strength based on the filter length and the boundary strength, and apply the deblocking filter to the block boundary between the first block and the second block. Herein, the filter length of the deblocking filter may be determined based on whether multi-reference prediction is applied to at least one of the first block or the second block.

In the image decoding method and device according to the present disclosure, the filter length of the deblocking filter may be determined based on at least one of a size of the second block or whether the second block is a block coded in a subblock-based inter prediction mode.

In the image decoding method and device according to the present disclosure, the boundary strength may be determined based on whether a number of multiple reference blocks for the first block is the same as a number of multiple reference blocks for the second block.

In the image decoding method and device according to the present disclosure, the boundary strength may be determined based on a weight for the multi-reference prediction.

In the image decoding method and device according to the present disclosure, when the multi-reference prediction is applied to the second block, the boundary strength may be determined based on whether a picture to which a normal reference block of the second block belongs is the same as a picture to which an additional reference block of the second block belongs.

In the image decoding method and device according to the present disclosure, when the multi-reference prediction is applied to the second block, the boundary strength may be determined based on whether a picture to which an additional reference block of the second block belongs is the same as a picture to which a normal reference block of the first block belongs.

In the image decoding method and device according to the present disclosure, when the multi-reference prediction is applied to the second block, the boundary strength may be determined based on a difference between a motion vector related to an additional reference block of the second block and a motion vector related to a normal reference block of the first block.

In the image decoding method and device according to the present disclosure, when the multi-reference prediction is applied to the second block, the boundary strength may be determined based on a difference between a motion vector related to a normal reference block of the second block and a motion vector related to an additional reference block of the first block.

In the image decoding method and device according to the present disclosure, a pre-defined maximum value for the boundary strength may be 3 or 4.

The image encoding method and device according to the present disclosure may determine a filter length of a deblocking filter applied to a block boundary between a first block and a second block in a current picture, determine a boundary strength of the deblocking filter, determine the deblocking filter having a predetermined type and strength based on the filter length and the boundary strength, and apply the deblocking filter to the block boundary between the first block and the second block. Herein, the filter length of the deblocking filter may be determined based on whether multi-reference prediction is applied to at least one of the first block or the second block.

A computer-readable digital storage medium storing encoded video/image information that causes performing the image decoding method by a decoding apparatus according to the present disclosure is provided.

A computer-readable digital storage medium storing video/image information generated according to the image encoding method according to the present disclosure is provided.

A method and a device for transmitting video/image information generated according to an image encoding method according to the present disclosure are provided.

[Advantageous Effects]

According to the present disclosure, the filter length of a deblocking filter can be adaptively determined by considering whether to apply multi-reference prediction and/or whether to apply overlapping block motion compensation.

According to the present disclosure, by considering whether to apply multi-reference prediction and/or whether to apply overlapping block motion compensation, the boundary strength of the deblocking filter can be determined more accurately, and the smoothing effect at the block boundary can be improved based on this.

According to the present disclosure, by defining an extended range for the boundary strength of the deblocking filter, the deblocking filter can be applied more precisely.

According to the present disclosure, by selectively using a variable derivation method according to the extended range, variables for determining the deblocking filter can be effectively derived.

[Description of Drawings]

FIG. 1 shows a video/image coding system according to the present disclosure.

FIG. 2 shows a schematic block diagram of an encoding apparatus to which an embodiment of the present disclosure is applicable and encoding of video/image signals is performed.

FIG. 3 shows a schematic block diagram of a decoding apparatus to which an embodiment of the present disclosure is applicable and decoding of video/image signals is performed.

FIG. 4 illustrates an image decoding method performed in an image decoding apparatus (300) according to the present disclosure.

FIG. 5 illustrates a schematic configuration of a decoding apparatus (300) that performs an image decoding method according to the present disclosure.

FIG. 6 illustrates an image encoding method performed in an encoding apparatus (200) according to the present disclosure.

FIG. 7 illustrates a schematic configuration of an encoding apparatus (200) that performs an image encoding method according to the present disclosure.

FIG. 8 shows an example of a contents streaming system to which embodiments of the present disclosure may be applied.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex.H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular region composed of a plurality of CTUs within a specific tile column and a specific tile row of one picture. A tile column is a rectangular region of CTUs having the same height as that of a picture and a width designated by a syntax requirement of a picture parameter set. A tile row is a rectangular region of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular region of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific region of a picture and information related to a corresponding region. One unit may include one luma block and two chroma (ex. cb, cr) blocks. In some cases, a unit may be used interchangeably with a term such as a block or an region, etc. In a general case, a MxN block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

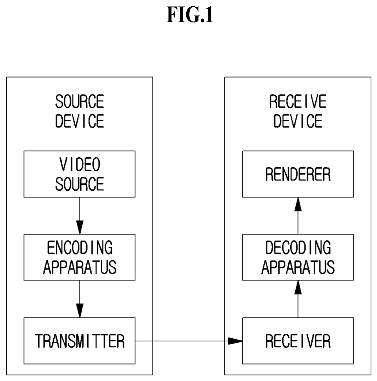

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding apparatus and a transmission unit. The receiving device may include a reception unit, a decoding apparatus and a renderer. The encoding apparatus may be referred to as a video/image encoding apparatus and the decoding apparatus may be referred to as a video/image decoding apparatus. A transmitter may be included in an encoding apparatus. A receiver may be included in a decoding apparatus. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding apparatus may encode an input video/image. An encoding apparatus may perform a series of procedures such as prediction, transform, quantization, etc. for compression and coding efficiency. Encoded data (encoded video/image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding apparatus.

A decoding apparatus may decode a video/an image by performing a series of procedures such as dequantization, inverse transform, prediction, etc. corresponding to an operation of an encoding apparatus.

A renderer may render a decoded video/image. A rendered video/image may be displayed through a display unit.

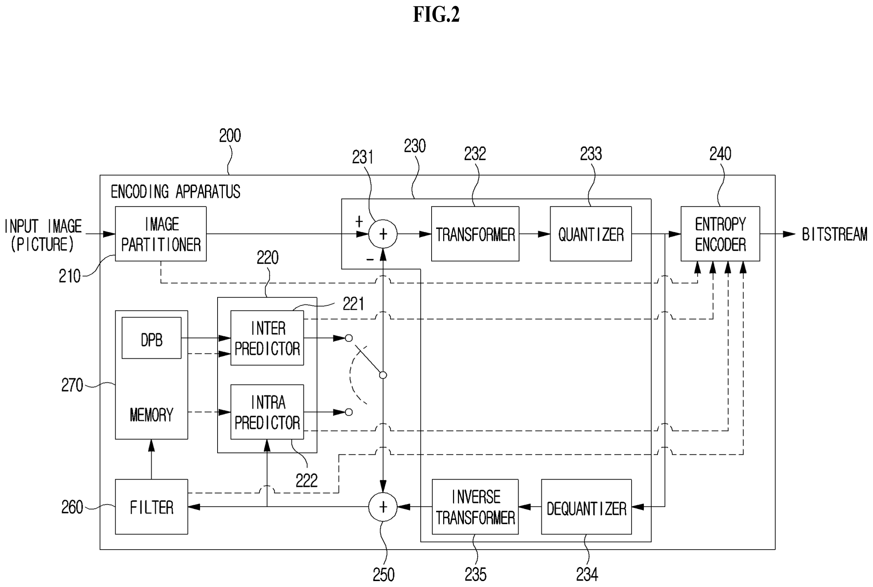

FIG. 2 shows a rough block diagram of an encoding apparatus to which an embodiment of the present disclosure may be applied and encoding of a video/image signal is performed.

Referring to FIG. 2, an encoding apparatus 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) accorrding to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding apparatus 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an region, etc. In a general case, a MxN block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding apparatus 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding apparatus 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a neighboring block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form.. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding apparatus to a decoding apparatus may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding apparatus 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding apparatus may avoid prediction mismatch in an encoding apparatus 200 and a decoding apparatus, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

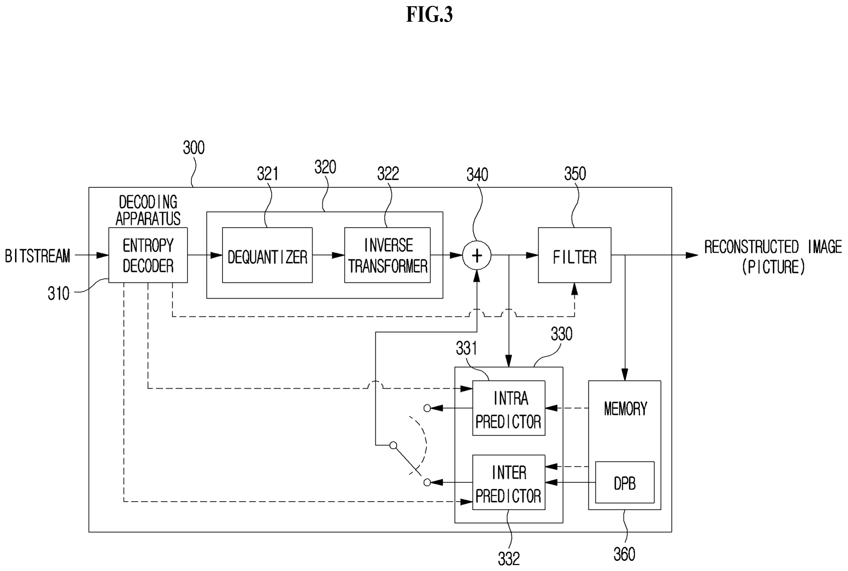

FIG. 3 shows a rough block diagram of a decoding apparatus to which an embodiment of the present disclosure may be applied and decoding of a video/image signal is performed.

Referring to FIG. 3, a decoding apparatus 300 may be configured by including an entropy decoder 310, a residual processor 320, a predictor 330, an adder 340, a filter 350 and a memory 360. A predictor 330 may include an inter predictor 331 and an intra predictor 332. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding apparatus 300 may reconstruct an image in response to a process in which video/image information is processed in an encoding apparatus of FIG. 2. For example, a decoding apparatus 300 may derive units/blocks based on block partition-related information obtained from the bitstream. A decoding apparatus 300 may perform decoding by using a processing unit applied in an encoding apparatus. Accordingly, a processing unit of decoding may be a coding unit, and a coding unit may be partitioned from a coding tree unit or the largest coding unit according to a quad tree structure, a binary tree structure and/or a ternary tree structure. At least one transform unit may be derived from a coding unit. And, a reconstructed image signal decoded and output through a decoding apparatus 300 may be played through a playback device.

A decoding apparatus 300 may receive a signal output from an encoding apparatus of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding apparatus may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a neighboring block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding apparatus may be further configured as an internal/external element of a decoding apparatus 300 or a reception unit may be a component of an entropy decoder 310.

Meanwhile, a decoding apparatus according to this specification may be referred to as a video/image/picture decoding apparatus, and the decoding apparatus may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding apparatus. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter predictor 332. A memory 360 may store motion information of a block from which motion information in a current picture is derived (or decoded) and/or motion information of blocks in a pre-reconstructed picture. The stored motion information may be transmitted to an inter predictor 260 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding apparatus 200 may be also applied equally or correspondingly to a filter 350, an inter predictor 332 and an intra predictor 331 of a decoding apparatus 300, respectively.

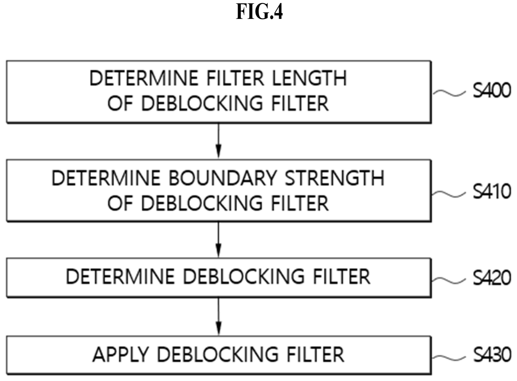

FIG. 4 illustrates an image decoding method performed in an image decoding apparatus according to the present disclosure.

Referring to FIG. 4, a filter length of a deblocking filter may be determined (S400).

A deblocking filter may be applied to a boundary (i.e., a block boundary) between blocks adjacent to each other based on a vertical boundary or a horizontal boundary within a current picture. Here, the blocks may mean coding units (CUs) or transform units (TUs). In addition, one coding unit or transform unit may be composed of one or more subblocks, and the blocks may mean subblocks.

Hereinafter, for convenience of explanation, the blocks are referred to as the first block and the second block. In addition, the first block and the second block in the present disclosure may be referred to as the P block and the Q block, respectively. When the boundary between blocks is a vertical boundary, the first block may mean the top block of the vertical boundary, and the second block may mean the bottom block of the vertical boundary. When the boundary between blocks is a horizontal boundary, the first block may mean the left block of the horizontal boundary, and the second block may mean the right block of the horizontal boundary.

The process of determining the filter length of the deblocking filter may determine at least one of whether it corresponds to a boundary between coding units (CU boundary), whether it corresponds to a boundary between transform units (TU boundary), or whether it corresponds to a boundary between subblocks (subblock boundary), and determine the filter length according to the corresponding block. The filter length may be divided into a filter length of the deblocking filter applied to the first block (hereinafter referred to as P length) and a filter length of the deblocking filter applied to the second block (hereinafter referred to as Q length), and these may be determined respectively.

Specifically, whether it corresponds to a CU boundary may be determined by checking whether it corresponds to a picture boundary, a subpicture boundary, a slice boundary, a tile boundary, or a virtual boundary within a picture. Whether it corresponds to a TU boundary may be determined while moving in N-pixel units in the horizontal and vertical directions within a coding unit. For example, in the case of a luma component, whether it corresponds to a boundary between transform units may be determined while moving in 4-pixel units, and in the case of a chroma component, whether it corresponds to a boundary between transform units may be determined while moving in 8-pixel units. In addition, it may be determined whether it corresponds to a subblock boundary for a luma component. When a subblock-based inter prediction mode (e.g., subblock merge mode, inter affine mode, etc.) is applied to a block, the block may include one or more subblocks. In this case, it may be checked/determined whether it corresponds to a subblock boundary while moving in 8-pixel units within the block. That is, a deblocking filter may not be applied to a 4-pixel unit subblock boundary. Hereinafter, a method for determining the filter length of the deblocking filter will be described.

Embodiment 1-A

The filter length at the block boundary may be determined based on the size of the block. The filter length may be determined for each of the first block and the second block adjacent to each other based on the block boundary.

Specifically, when the size of the second block is greater than or equal to the first threshold size, the filter length (Q length) of the deblocking filter applied to the second block may be determined as 7. When the size of the second block is less than the first threshold size and greater than or equal to the second threshold size, Q length may be determined as 3. When the size of the second block is less than the second threshold size, Q length may be determined as 1. For example, the first threshold size may be 32 and the second threshold size may be 4.

The pre-determined filter length may be updated based on at least one of whether the block is a block coded in a subblock-based inter prediction mode, the position of the subblock, or the distance to a block boundary (CU/TU boundary).

Specifically, when the second block is a block coded in a subblock-based inter prediction mode (or, when the second block includes a plurality of subblocks), the Q length for the second block may be updated to the minimum value of the predetermined Q length and 5. Otherwise, the Q length for the second block may not be updated.

It may be checked whether the position corresponds to a subblock boundary while moving in 8-pixel units within the second block. In this case, it may be checked whether the position (pos) corresponds to a TU boundary. When the pos corresponds to a TU boundary, the Q length for the second block may be updated to the minimum value of the pre-determined Q length and 5. When the pos does not correspond to a TU boundary, it may be checked whether a position moved by 4-pixel from the pos corresponds to a TU boundary. When the position moved by 4-pixel corresponds to a TU boundary, the Q length for the second block may be updated to 1. When the position moved by 4-pixel does not correspond to a TU boundary, the Q length for the second block may be updated based on at least one of whether the position moved by 8-pixel from the pos corresponds to a TU boundary or the position of the subblock to which the pos belongs. When the position moved by 8-pixel from the pos corresponds to a TU boundary or the subblock to which the pos belongs corresponds to the first subblock (in particular, a right boundary of the first subblock) or the last subblock (in particular, a left boundary of the last subblock) in the block, the Q length for the second block may be updated to 2. Otherwise (i.e., the position moved by 8-pixel from the pos does not correspond to a TU boundary and the subblock to which the pos belongs does not correspond to the first subblock or the last subblock in the block), the Q length for the second block may be updated to 3.

The filter length for the first block may be determined or updated in the same manner as for the second block described above, and redundant description is omitted.

Embodiment 1-B

The filter length at the block boundary may be determined based on whether it is a block to which multi-reference prediction is applied.

The multi-reference prediction according to the present disclosure may derive a final prediction block through a weighted sum of a plurality of reference blocks. Here, the plurality of reference blocks may include reference block(s) for unidirectional prediction or bidirectional prediction of inter mode and one or more additional reference blocks for multi-reference prediction. For example, the additional reference block may be an inter prediction block derived based on the inter mode, or an intra prediction block derived based on the intra mode. The multi-reference prediction according to the present disclosure is not restricted to being applied only to a block coded in the inter mode. The multi-reference prediction may also be applied to a block coded in the intra mode or the IBC (intra block copy) mode, in which case, an inter prediction block and/or an intra prediction block may be used as an additional reference block.

A deblocking filter may remove blocking artifacts caused by discontinuity between blocks by filtering block boundaries. As described above, the filter length may be adjusted based on at least one of the size of a block, whether the block is coded in a subblock-based inter prediction mode, the position of a subblock, or the distance from the block boundary. However, since a block to which multi-reference prediction is applied has additional reference block(s) in addition to up to two reference blocks for unidirectional or bidirectional prediction, it may be seen that the samples in the block are sufficiently smoothed. Therefore, the filter length of the deblocking filter may vary depending on whether multi-reference prediction is applied.

Specifically, it may be checked whether the second block is a block to which multi-reference prediction is applied. When the second block is a block to which multi-reference prediction is applied, it may be checked whether the size of the second block is less than a first threshold size. In this case, regardless of whether the first block is a block to which multi-reference prediction is applied, when the second block is a block to which multi-reference prediction is applied, it may be checked whether the size of the second block is greater than or equal to the first threshold size. Alternatively, when both the first block and the second block are blocks to which multi-reference prediction is applied, it may be restricted to check whether the size of the second block is greater than or equal to the first threshold size. When the second block is not a block to which multi-reference prediction is applied, the filter length may be determined according to the aforementioned Embodiment 1-A.

When the size of the second block is greater than or equal to the first threshold size, the Q length for the second block may be determined as 3. When the size of the second block is less than the first threshold size, the Q length for the second block may be determined as 1. For example, the first threshold size may be 32.

Based on whether the second block is a block coded in a subblock-based inter prediction mode, the pre-determined filter length may be updated. When the second block is a block coded in a subblock-based inter prediction mode (or, when the second block includes a plurality of subblocks), the Q length for the second block may be updated to 1. Otherwise, the Q length for the second block may not be updated.

In the same manner as the second block described above, the P length for the first block may be determined or updated based on whether the first block is a block to which multi-reference prediction is applied.

In this way, a block to which multi-reference prediction is applied may have a shorter filter length than a block to which multi-reference prediction is not applied. When the first or second block is a block to which multi-reference prediction is applied and has a reference block in subblock units, the filter length may be set short because the discontinuity at the subblock boundary is alleviated. Alternatively, when the first or second block is a block to which multi-reference prediction is applied and has a reference block in subblock units, a deblocking filter may not be applied to the subblock boundary.

Embodiment 1-C

The filter length at the block boundary may be determined based on whether it is a block to which overlapped block motion compensation (OBMC) is applied.

Specifically, it may be checked whether the second block is a block to which OBMC is applied. When the second block is a block to which OBMC is applied, it may be checked whether the size of the second block is less than the first threshold size. In this case, regardless of whether the first block is a block to which OBMC is applied, when the second block is a block to which OBMC is applied, it may be checked whether the size of the second block is greater than or equal to the first threshold size. Alternatively, when both the first block and the second block are blocks to which OBMC is applied, it may be restricted to check whether the size of the second block is greater than or equal to the first threshold size. When the second block is not a block to which OBMC is applied, the filter length may be determined according to the aforementioned Embodiment 1-A.

When the size of the second block is greater than or equal to the first threshold size, the Q length for the second block may be determined as 3. When the size of the second block is less than the first threshold size, the Q length for the second block may be determined as 1. For example, the first threshold size may be 32.

Based on whether the second block is a block coded in a subblock-based inter prediction mode, the pre-determined filter length may be updated. When the second block is a block coded in a subblock-based inter prediction mode (or, when the second block includes a plurality of subblocks), the Q length for the second block may be updated to 1. Otherwise, the Q length for the second block may not be updated.

In the same manner as the second block described above, the P length for the first block may be determined or updated based on whether the first block is a block to which OBMC is applied.

In this way, a block to which OBMC is applied may have a shorter filter length than a block to which OBMC is not applied. When the first or second block is a block to which OBMC is applied and has a reference block in the subblock units, the filter length may be set short because the discontinuity at the subblock boundary is alleviated. Alternatively, when the first or second block is a block to which OBMC is applied and has a reference block in subblock units, the deblocking filter may not be applied to the subblock boundary. The filter length for the deblocking filter may be determined/updated based on a comparison between the filter length for OBMC and the filter length for the deblocking filter. When the filter length for OBMC is less than the filter length for the deblocking filter, the deblocking filter may be applied.

Referring to Fig. 4, the boundary strength (BS) of the deblocking filter may be determined (S410).

BS may be determined by considering the characteristics of the first and second blocks adjacent to each other based on the aforementioned block boundary (CU/TU/subblock boundary). The block boundary may be found while moving in N-pixel units. For example, in the case of the luma component, the block boundary may be found while moving in 4-pixel units, and in the case of the chroma component, the block boundary may be found while moving in 8-pixel units.

The BS may be determined based on at least one of the prediction mode of the first block and/or the second block or whether a non-zero transform coefficient is present. Additionally, when the prediction mode of the first block and/or the second block is the inter mode or the IBC mode, the BS may be determined based on the motion information of the corresponding block. In this case, a block vector (BV) may be used as the motion information of the IBC mode, and at least one of the number of motion vectors, a reference picture, or a motion vector may be used as the motion information of the inter mode. Hereinafter, a method for determining the BS of the deblocking filter will be described in detail.

Embodiment 2-A

It may be checked whether the P block and/or the Q block are blocks to which BDPCM (block difference pulse code modulation) is applied. When both the P block and the Q block are blocks to which BDPCM is applied, BS may be determined as 0. Otherwise (i.e., when at least one of the P block or the Q block is a block to which BDPCM is not applied), it may be checked whether the P block and/or the Q block are blocks coded in the intra mode or the combined inter-intra prediction mode (CIIP mode).

When the P block and/or the Q block are blocks coded in the intra mode or the CIIP mode, the BS may be determined as 2. Otherwise (i.e., when both the P block and the Q block are not blocks coded in the intra mode and the CIIP mode), it may be checked whether at least one of a block edge corresponds to a transform unit edge or whether at least one of the P block or the Q block has a non-zero transform coefficient.

When the block edge corresponds to a transform unit edge, and at least one of the P block or the Q block has a non-zero transform coefficient, BS may be determined as 1. Otherwise (i.e., when the block edge does not correspond to a transform unit edge, or both the P block and the Q block do not have a non-zero transform coefficient), it may be checked whether at least one of the following conditions 1 to 4 is satisfied.

(Condition 1) The prediction mode of the P block is different from the prediction mode of the Q block. Here, each of the P and Q blocks has one of a plurality of pre-defined prediction modes, and the plurality of prediction modes may include at least one of an intra mode, an inter mode, an IBC mode, or a palette mode.

(Condition 2) Both the P block and the Q block are blocks coded in the IBC mode, and the difference between the block vectors of the P block and the Q block is greater than or equal to a threshold (e.g., 8).

(Condition 3) The reference picture of the P block and the reference picture of the Q block are different from each other, or the number of motion vectors for prediction of the P block and the number of motion vectors for prediction of the Q block are different from each other.

(Condition 4) The difference between the motion vectors of the P block and the Q block is greater than or equal to a threshold (e.g., 8).

When at least one of the above conditions 1 to 4 is satisfied, BS may be determined as 1. When none of the above conditions 1 to 4 are satisfied, BS may be determined as 0.

A method for determining BS depending on whether conditions 2 to 4 are satisfied will be described in more detail. When the right sample is q and the left sample is p based on the vertical edge (or, when the bottom sample is q and the top sample is p based on the horizontal edge), a block including sample q is called a Q block, and a block including sample p is called a P block. The motion vectors of the Q block and the P block may be represented as (mvQX _x, mvQX_y) and (mvPX_x, mvPX_y), respectively, and X represents a List and may be replaced with 0 or 1.

The above conditions 2 to 4 may be applied when both the Q block and the P block are blocks coded in the IBC mode or blocks coded in the inter mode. When both the Q block and the P block are blocks coded in the IBC mode, or a slice including the Q block and/or the P block is a P slice, BS may be determined as follows. That is, when the reference picture for prediction of the Q block and the reference picture for prediction of the P block are different from each other, BS may be determined as 1. When the reference picture for prediction of the block Q and the reference picture for prediction of the block P are the same, BS may be determined based on the difference between block vectors or motion vectors of block Q and block P. When the difference between the block vectors or motion vectors is greater than or equal to a threshold (nTh), BS may be determined as 1, and otherwise, BS may be determined as 0. A method for determining BS based on the difference between the motion vectors of both blocks may be expressed as the following Equation 1.

[Equation 1]

$$BS = ((abs(mvQ0\_x - mvP0\_x) >= nTh) \,\|\, (abs(mvQ0\_y - mvP0\_y) >= nTh) \,?\, 1 : 0$$

In Equation 1, mvQ0_x and mvQ0_y may represent the x-component and the y-component of the L0 motion vector of the Q block, respectively. mvP0_x and mvP0_y may represent the x-component and the y-component of the L0 motion vector of the P block, respectively. nTh may be a threshold for determining BS. When either the difference between mvQ0_x and mvP0_x or the difference between mvQ0_y and mvP0_y is greater than or equal to nTh, BS may be determined as 1, otherwise it may be determined as 0. That is, when the difference of the motion vectors between the P block and the Q block is greater than or equal to a threshold, BS may be determined as 1, otherwise BS may be determined as 0. Here, the difference may mean an absolute difference, and may be calculated for the x-component and the y-component of the motion vector, respectively.

When both the Q block and the P block are not blocks coded in the IBC mode, and the slice including the Q block and/or the P block is a B slice, BS may be determined as follows. That is, when the reference picture for prediction of the Q block and the reference picture for prediction of the P block are different from each other, BS may be determined as 1. When the reference picture for prediction of the Q block and the reference picture for prediction of the P block are the same, BS may be determined based on the difference between the motion vectors of the Q block and the P block. Hereinafter, a method for determining BS when the reference picture of the Q block and the reference picture of the P block are different from each other will be described.

First, it may be determined whether the reference picture of the P block is the same as the reference picture of the Q block. For example, when the L0 reference picture of the P block is the same as the L0 reference picture of the Q block and the L1 reference picture of the P block are the same as the L1 reference picture of the Q block, the reference picture of the P block may be determined to be the same as the reference picture of the Q block. Alternatively, when the L1 reference picture of the P block is the same as the L0 reference picture of the Q block and the L0 reference picture of the P block are the same as the L1 reference picture of the Q block, the reference picture of the P block may be determined to be the same as the reference picture of the Q block.

When the reference picture of the P block and the reference picture of the Q block are determined to be the same, it may be checked whether the L0 reference picture and the L1 reference picture of the P block are the same. When the L0 reference picture and the L1 reference picture of the P block are different, BS may be determined based on whether the L0 reference picture of the P block is the same as the L0 reference picture of the Q block. Specifically, when the L0 reference picture of the P block is the same as the L0 reference picture of the Q block, BS may be determined as in the following Equation 2.

$$BS = ((abs(mvQ0\_x - mvP0\_x) >= nTh) \| (abs(mvQ0\_y - mvP0\_y) >= nTh) \| (abs(mvQ1\_x - mvP1\_x) >= nTh) \| (abs(mvQ1\_y - mvP1\_y) >= nTh)) ? 1 : 0 \qquad \text{[Equation 2]}$$

In Equation 2, mvQ0_x and mvQ0_y may represent the x-component and y-component of the L0 motion vector of the Q block, respectively. mvP0_x and mvP0_y may represent the x-component and y-component of the L0 motion vector of the P block, respectively. mvQ1_x and mvQ1_y may represent the x-component and y-component of the L1 motion vector of the Q block, respectively. mvP1_x and mvP1_y may represent the x-component and y-component of the L1 motion vector of the P block, respectively. nTh may be a threshold for determining the BS. Below, these may be interpreted with the same meaning.

According to Equation 2, when any one of the difference between mvQ0_x and mvP0_x, the difference between mvQ0_y and mvP0_y, the difference between mvQ1_x and mvP1_x, or the difference between mvQ1_y and mvP1_y is greater than or equal to nTh, BS may be determined as 1. Otherwise (i.e., when all of the above differences are less than nTh), BS may be determined as 0.

That is, according to Equation 2, when the difference of the motion vectors in the same direction (L0 or L1) between the P block and the Q block is greater than or equal to a threshold, BS may be determined as 1, and otherwise, BS may be determined as 0. Here, the difference may mean the absolute value of the difference, and may be calculated for each of the x-component and y-component of the motion vector.

When the L0 reference picture of the P block is different from the L0 reference picture of the Q block, BS may be determined as in the following Equation 3.

$$BS = ((abs(mvQ1\_x - mvP0\_x) >= nTh) \| (abs(mvQ1\_y - mvP0\_y) >= nTh) \| (abs(mvQ0\_x - mvP1\_x) >= nTh) \| (abs(mvQ0\_y - mvP1\_y) >= nTh)) ? 1 : 0 \qquad \text{[Equation 3]}$$

According to Equation 3, when any one of the difference between mvQ1_x and mvP0_x, the difference between mvQ1_y and mvP0_y, the difference between mvQ0_x and mvP1_x, or the difference between mvQ0_y and mvP1_y is greater than or equal to nTh, BS may be determined as 1. Otherwise (i.e., when all of the above differences are less than nTh), BS may be determined as 0.

That is, according to Equation 3, when the difference between the motion vectors in different directions between the P block and the Q block is greater than or equal to a threshold, BS may be determined as 1, otherwise, BS may be determined as 0. Here, the difference may mean the absolute value of the difference, and may be calculated for each of the x-component and y-component of the motion vector.

When the L0 reference picture and the L1 reference picture of the P block are the same, BS may be determined as in the following Equation 4.

$$BS = ((abs(mvQ0\_x - mvP0\_x) >= nTh) \| (abs(mvQ0\_y - mvP0\_y) >= nTh) \| (abs(mvQ1\_x - mvP1\_x) >= nTh) \| (abs(mvQ1\_y - mvP1\_y) >= nTh)) \&\& ((abs(mvQ1\_x - mvP0\_x) >= nTh) \| (abs(mvQ1\_y - mvP0\_y) >= nTh) \| (abs(mvQ0\_x - mvP1\_x) >= nTh) \| (abs(mvQ0\_y - mvP1\_y) >= nTh)) ? 1 : 0 \qquad \text{[Equation 4]}$$

According to Equation 4, when the difference between the motion vectors in the same direction between the P block and the Q block is greater than or equal to a threshold, and the difference between the motion vectors in different directions between the P block and the Q block is greater than or equal to a threshold, BS may be determined as 1. Otherwise, BS may be determined as 0. This is as described with reference to Equations 2 and 3, and redundant explanation will be omitted.

Embodiment 2-B

A block to which multi-reference prediction is applied may have additional reference block(s) in addition to up to two reference blocks for unidirectional or bidirectional prediction. Here, in order to distinguish the up to two reference blocks from the additional reference block(s), the up to two reference blocks are called normal reference blocks. When the motion information of the corresponding block is different from the motion information of a neighboring block (or, when the difference of the motion information between the corresponding block and the neighboring block is greater than a specific threshold), discontinuity between blocks may occur. Accordingly, in determining whether to filter the block boundary for a block to which multi-reference prediction is applied, in addition to the motion information specifying the normal reference block of the corresponding block, the motion information specifying the additional reference block(s) may be further considered to determine the discontinuity of the block boundary.

As an example of multi-reference prediction, when the current block has motion information for bidirectional prediction, two reference blocks (P0, P1) for bidirectional prediction may be derived. In addition, additional reference blocks (P2, P3) for multi-reference prediction may be derived. This is only an example, and the number of reference blocks for multi-reference prediction may be determined within a pre-defined maximum number of N.

In this way, the current block has four reference blocks (P0 to P3), and the final prediction block of the current block may be generated through a weighted sum of the four reference blocks. In this case, the weight (W2) applied to the P2 reference block and the weight (W3) applied to the P3 block may be used. For example, the final prediction block (P) of the current block may be generated as in the following Equation 5.

$$[\text{Equation 5}]$$
$$P' = (P0 + P1) / 2$$
$$P'' = W2 * P2 + (1-W2) * P'$$
$$P = W3 * P3 + (1-W3) * P''$$

In the process of generating the final prediction block of the current block, since an additional reference block for multi-reference prediction is used, in the process of determining the BS of the deblocking filter, at least one of the information on the additional reference block P2 and P3 or the information on multi-reference prediction may be further considered in addition to the information on the reference block P0 and P1. Here, the information on the reference block may include at least one of a motion vector for specifying the corresponding reference block, a reference picture to which the corresponding reference block belongs, or a prediction mode for deriving the corresponding reference block. The information on the multi-reference prediction may include at least one of the number of reference blocks used for multi-reference prediction, a motion vector for multi-reference prediction, a reference picture for multi-reference prediction, an index of the reference picture, or an output order (POC) of the reference picture.

For example, BS may be determined based on the number of reference blocks used for prediction of Q block and/or P block. This may be applied when multi-reference prediction is applied to at least one of Q block or P block. However, it is not limited thereto, and may also be applied when multi-reference prediction is not applied to Q block and P block.

Specifically, the number of reference blocks used for prediction of the Q block is called numPred_Q, and the number of reference blocks used for prediction of the P block is called numPred _P. When numPred _Q and numPred_P are not the same, BS may be determined as 1. Otherwise, BS may be determined based on the difference between the motion vectors of the Q block and the P block. That is, when numPred_Q and numPred_P are the same, BS may be determined based on whether the difference between the motion vectors of the Q block and the P block is less than a threshold. This is as described in detail in Condition 4 of Embodiment 2-A.

For example, assume that the Q block performs bidirectional prediction and has two additional reference blocks for multi-reference prediction, and the P block performs bidirectional prediction but does not perform multi-reference prediction. In this case, the number of reference blocks used for prediction of the Q block (numPred_Q) becomes 4, and the number of reference blocks used for prediction of the P block (numPred_P) becomes 2. In this way, when numPred_Q and numPred_P are not the same, BS may be determined as 1.

For example, it may be checked whether the P block and/or the Q block are blocks to which BDPCM is applied.

When both the P block and the Q block are blocks to which BDPCM is applied, BS may be determined as 0. Otherwise, it may be checked whether the P block and/or the Q block are blocks coded in the intra mode or the CIIP mode (combined inter-intra prediction mode).

When the P block and/or the Q block are blocks coded in the intra mode or the CIIP mode, BS may be determined as 2. Otherwise, it may be checked whether at least one of a block edge corresponds to a transform unit edge or whether at least one of the P block or the Q block has a non-zero transform coefficient.

When a block edge corresponds to a transform unit edge, and at least one of the P block or Q block has a non-zero transform coefficient, BS may be determined as 1. Otherwise, it may be checked whether at least one of the following conditions 1 to 4 is satisfied.

(Condition 1) The prediction mode of the P block is different from the prediction mode of the Q block.

(Condition 2) Both the P block and the Q block are blocks coded in the IBC mode, and the difference between the block vectors of the P block and the Q block is greater than or equal to a threshold (e.g., 8).

(Condition 3) The reference picture of the P block and the reference picture of the Q block are different from each other, or the number of reference blocks for prediction of the P block and the number of reference blocks for prediction of the Q block are different from each other.

(Condition 4) The difference between the motion vectors of the P block and the Q block is greater than or equal to a threshold (e.g., 8).

When at least one of the above conditions 1 to 4 is satisfied, BS may be determined as 1. When none of the above conditions 1 to 4 are satisfied, BS may be determined as 0.

For example, when multi-reference prediction is applied to a Q block and/or a P block, an additional reference block for multi-reference prediction may be present. In this case, BS may be determined considering the prediction mode used to derive the additional reference block. It is assumed that multi-reference prediction is applied to a Q block coded in the inter mode. In this case, when the Q block uses a prediction block derived based on the intra mode or the IBC mode as an additional reference block for multi-reference prediction, BS may be determined as 2. Alternatively, it is assumed that multi-reference prediction is applied to a P block coded in the intra mode. In this case, when the P block uses a prediction block derived based on the inter mode as an additional reference block for multi-reference prediction, BS may be determined as 2.

For example, when both the Q block and the P block are blocks to which multi-reference prediction is applied, BS may be determined as 0. BS may be determined based on whether information on multi-reference prediction between the Q block and the P block is the same. When information on multi-reference prediction between the Q block and the P block is the same, BS may be determined as 0. Otherwise, BS may not be determined as 0. In this way, complexity may be reduced by determining BS as 0.

When multi-reference prediction is applied to the Q block and/or the P block, BS may be determined without performing a comparison of motion information (e.g., whether the motion information is the same) between the Q block and the P block. Here, the motion information means a motion vector, a reference picture, the number of reference blocks, etc., as described above. This is because, in the case of multi-reference prediction, an additional weight (W2, W3) may be used for weighted sum with an additional reference block, and even if the current block has the same motion vector as an adjacent block, the brightness of the prediction block for the current block may vary due to this weight.

Alternatively, when the additional weight (W2, W3) is less than a specific threshold, the difference between the prediction block before applying the multi-reference prediction and the prediction block after applying the multi-reference prediction may not be large. In this case, the application of the multi-reference prediction may not affect the determination of the BS. Accordingly, either Embodiment 2-A or Embodiment 2-B described above may be selected according to the additional weight, and the BS may be determined based on the selected method. For example, when the additional weight (W2, W3) is less than a specific threshold, the BS may be determined based on Embodiment 2-A. When the additional weight (W2, W3) are greater than or equal to a specific threshold, the BS may be determined based on Embodiment 2-B. However, this is only an example, and at least one of the information on the multi-reference prediction may be further considered in addition to the additional weight. Depending on the additional weight and information on multi-reference prediction, either Embodiment 2-A or Embodiment 2-B described above may be selected, and the BS may be determined based on the selected method.

The above BS may be determined as any integer in the range of 0 to k, where k may mean the maximum value among the available BSs. When the additional weight is greater than or equal to a specific threshold, the k may have a larger value than when multi-reference prediction is not applied, and the range of available BSs may be expanded.

Alternatively, a plurality of weight intervals for multi-reference prediction may be defined, and a range of BSs (i.e., value of k) available for each interval may be defined. Any one of a plurality of weight intervals may have a different value of k from the other. The weight interval to which the additional weight belongs may be determined, and the BS may be determined within the range of BSs corresponding to the weight interval.

Embodiment 2-C

When the Q block and/or the P block are blocks to which multi-reference prediction is applied, the block may have an additional reference block in addition to the reference block for unidirectional or bidirectional prediction (hereinafter referred to as a normal reference block). In this case, the motion information of the normal reference block and the additional reference block may be compared with each other to determine the BS.

In the present embodiment, when multi-reference prediction is applied to the Q block and/or the P block, the boundary strength of the deblocking filter may vary in the process. The BS may be determined based on whether the reference picture to which the normal reference block belongs is identical to the reference picture to which the additional reference block belongs. The comparison between the reference pictures may be applied between the normal reference block and the additional reference block of the Q block. The comparison between the reference pictures may be applied between the normal reference block and the additional reference block of the P block. The comparison between the reference pictures may be applied between the additional reference block of the Q block and the normal reference block of the P block. The comparison between the reference pictures may be applied between the additional reference block of the P block and the normal reference block of the Q block. The comparison between the reference pictures may be applied between the additional reference block of the P block and the additional reference block of the Q block.

In addition, BS may be determined based on the difference between a motion vector indicating the normal reference block and a motion vector indicating the additional reference block. The difference of the motion vectors may be calculated between the normal reference block and the additional reference block of the Q block. The difference of the motion vectors may be calculated between the normal reference block and the additional reference block of the P block. The difference of the motion vectors may be calculated between the additional reference block of the Q block and the normal reference block of the P block. The difference of the motion vectors may be calculated between the additional reference block of the Q block and the additional reference block of the P block. The difference of the motion vectors may be calculated between the additional reference block of the P block and the normal reference block of the Q block. The difference of the motion vectors may be calculated between the additional reference block of the P block and the additional reference block of the Q block. BS may be determined based on whether the difference of the motion vectors is less than a pre-defined threshold.

It is assumed that each of the Q block and the P block performs bidirectional prediction and has two additional reference blocks for multi-reference prediction, and in this case, a method of determining BS will be described. Hereinafter, for convenience of explanation, the picture to which the normal reference block belongs is called a normal reference picture, and the motion vector indicating the normal reference block is called a normal motion vector. In addition, the picture to which the additional reference block belongs is called an additional reference picture, and the motion vector indicating the additional reference block is called an additional motion vector.

First, it may be determined whether the normal reference picture of the P block and the normal reference picture of the Q block are the same. For example, when the L0 normal reference picture of the P block and the L0 normal reference picture of the Q block are the same and the L1 normal reference picture of the P block and the L1 normal reference picture of the Q block are the same, the normal reference picture of the P block and the normal reference picture of the Q block may be determined to be the same. Alternatively, when the L1 normal reference picture of the P block and the L0 normal reference picture of the Q block are the same and the L0 normal reference picture of the P block and the L1 normal reference picture of the Q block are the same, the normal reference picture of the P block and the normal reference picture of the Q block may be determined to be the same.

When it is determined that the normal reference picture of the P block and the normal reference picture of the Q block are the same, it may be checked whether the L0 normal reference picture and the L1 normal reference picture of the P block are the same. When the L0 normal reference picture and the L1 normal reference picture of the P block are different, the BS may be determined based on whether the L0 normal reference picture of the P block is the same as the L0 normal reference picture of the Q block. Specifically, when the L0 normal reference picture of the P block is the same as the L0 normal reference picture of the Q block, the BS may be determined as in the following Equation 6.

$$tmpBS = ((abs(mvQ0\_x - mvP0\_x) >= nTh) \parallel (abs(mvQ0\_y - mvP0\_y) >= nTh) \parallel (abs(mvQ1\text{-}\_x - mvP1\_x) >= nTh) \parallel (abs(mvQ1\_y - mvP1\_y) >= nTh)) ? 1 : 0 \qquad \text{[Equation 6]}$$

In Equation 6, $mvQ0\_x$ and $mvQ0\_y$ may represent the x-component and y-component of the L0 normal motion vector of the Q block, respectively. $mvP0\_x$ and $mvP0\_y$ may represent the x-component and y-component of the L0 normal motion vector of the P block, respectively. $mvQ1\_x$ and $mvQ1\_y$ may represent the x-component and y-component of the L1 normal motion vector of the Q block, respectively. $mvP1\_x$ and $mvP1\_y$ may represent the x-component and y-component of the L1 normal motion vector of the P block, respectively. nTh may be a threshold for determining the BS. According to Equation 6, when any one of the difference between $mvQ0\_x$ and $mvP0\_x$, the difference between $mvQ0\_y$

and mvP0_y, the difference between mvQ1_x and mvP1_x, or the difference between mvQ1_y and mvP1_y is greater than or equal to nTh, BS may be determined as 1. Otherwise (i.e., when all of the above differences are less than nTh), BS may be determined as 0.

That is, according to Equation 6, when the difference of the normal motion vectors in the same direction (L0 or L1) between the P block and the Q block is greater than or equal to a threshold, BS may be determined as 1, otherwise, BS may be determined as 0. Here, the difference may mean the absolute value of the difference and may be calculated for each of the x-component and y-component of the motion vector.

When the L0 normal reference picture of the P block is different from the L0 normal reference picture of the Q block, the BS may be determined as in the following Equation 7.

$$\text{tmpBS} = ((\text{abs}(mvQ1\_x - mvP0\_x) >= nTh) \,\|\, (\text{abs}(mvQ1\_y - mvP0\_y) >= nTh) \,\|\, (\text{abs}(mvQ0\_x - mvP1\_x) >= nTh) \,\|\, (\text{abs}(mvQ0\_y - mvP1\_y) >= nTh)) \,?\, 1 : 0 \qquad \text{[Equation 7]}$$

According to Equation 7, when any one of the difference between mvQ1_x and mvP0_x, the difference between mvQ1_y and mvP0_y, the difference between mvQ0_x and mvP1_x, or the difference between mvQ0_y and mvP1_y is greater than or equal to nTh, BS may be determined as 1. Otherwise (i.e., when all of the above differences are less than nTh), BS may be determined as 0.

That is, according to Equation 7, when the difference between the normal motion vectors in different directions between the P block and the Q block is greater than or equal to a threshold, BS may be determined as 1, otherwise, BS may be determined as 0. Here, the difference may mean the absolute value of the difference, and may be calculated for each of the x-component and y-component of the motion vector.

When the L0 normal reference picture and the L1 normal reference picture of the P block are the same, BS may be determined as in the following Equation 8.

$$\text{tmpBS} = ((\text{abs}(mvQ0\_x - mvP0\_x) >= nTh) \,\|\, (\text{abs}(mvQ0\_y - mvP0\_y) >= nTh) \,\|\, (\text{abs}(mvQ1\_x - mvP1\_x) >= nTh) \,\|\, (\text{abs}(mvQ1\_y - mvP1\_y) >= nTh)) \,\&\&\, ((\text{abs}(mvQ1\_x - mvP0\_x) >= nTh) \,\|\, (\text{abs}(mvQ1\_y - mvP0\_y) >= nTh) \,\|\, (\text{abs}(mvQ0\,x - mvP1\_x) >= nTh) \,\|\, (\text{abs}(mvQ0\_y - mvP1\_y) >= nTh)) \,?\, 1 : 0 \qquad \text{[Equation 8]}$$

According to Equation 8, when the difference between the normal motion vectors in the same direction between the P block and the Q block is greater than or equal to a threshold, and the difference between the normal motion vectors in different directions between the P block and the Q block is greater than or equal to a threshold, BS may be determined as 1. Otherwise, BS may be determined as 0.

Then, at least one of the reference picture or the motion vector between the normal reference block and the additional reference block of the Q block may be compared. In addition, at least one of the reference picture or the motion vector between the additional reference block of the Q block and the normal reference block of the P block may be compared. The comparison process here may be performed repeatedly as many times as the number of additional reference blocks of the Q block. Through this, the pre-determined BS may be updated.

Specifically, it may be determined whether the normal reference picture and the additional reference picture of the Q block are the same. When the L0 normal reference picture of the Q block is different from the additional reference picture of the Q block, or the L1 normal reference picture of the Q block is different from the additional reference picture of the Q block, it may be determined that the normal reference picture and the additional reference picture of the Q block are not the same.

It may be determined whether the normal reference picture of the P block and the additional reference picture of the Q block are the same. When the L0 normal reference picture of the P block is the same as the additional reference picture of the Q block, or the L1 normal reference picture of the P block is the same as the additional reference picture of the Q block, the normal reference picture of the P block and the additional reference picture of the Q block may be determined to be the same.

When the normal reference picture of the P block and the additional reference picture of the Q block are the same (in particular, when the L0 normal reference picture of the P block is the same as the additional reference picture of the Q block), the BS may be determined as in the following Equation 9.

[Equation 9]

$$\text{tmpBS} = ((\text{abs}(mvQi\_x - mvP0\_x) >= nTh1) \,\|\, (\text{abs}(mvQi\_y - mvP0\_y) >= nTh1)) \,?\, 1 : 0$$

In Equation 9, mvQi_x and mvQi_y may represent the x-component and y-component of the additional motion vector of the Q block, respectively. mvP0_x and mvP0_y may represent the x-component and y-component of the L0 normal motion vector of the P block, respectively. nTh1 may represent a threshold for determining BS. When either the difference between mvQi_x and mvP0_x or the difference between mvQi_y and mvP0_y is greater than or equal to nTh1, BS may be determined as 1. Otherwise (i.e., when both of the differences are less than nTh1), BS may be determined as 0.

When the normal reference picture of the P block and the additional reference picture of the Q block are the same (in particular, when the L1 normal reference picture of the P block is the same as the additional reference picture of the Q block), the BS may be determined as in the following Equation 10.

[Equation 10]

$$tmpBs = ((abs(mvQi\_x - mvP1\_x) >= nTh1) \parallel (abs(mvQi\_y - mvP1\_y) >= nTh1)) \ ? \ 1 : 0$$

In Equation 10, mvQi_x and mvQi_y may represent the x-component and y-component of the additional motion vector of the Q block, respectively. mvP1_x and mvP1_y may represent the x-component and y-component of the L1 normal motion vector of the P block, respectively. nTh1 may represent a threshold for determining BS. When either the difference between mvQi_x and mvP1_x or the difference between mvQi_y and mvP1_y is greater than or equal to nTh1, BS may be determined as 1. Otherwise (i.e., when both of the differences are less than nTh1), BS may be determined as 0.

On the other hand, when the normal reference picture of the P block and the additional reference picture of the Q block are determined to be different from each other, BS may be determined as 1.

Then, at least one of the reference picture or the motion vector between the normal reference block and the additional reference block of the P block may be compared. In addition, at least one of the reference picture or the motion vector between the additional reference block of the P block and the normal reference block of the Q block may be compared. The comparison process here may be performed repeatedly as many times as the number of additional reference blocks of the Q block. Through this, the pre-determined BS may be updated.

Specifically, it may be determined whether the normal reference picture and the additional reference picture of the P block are the same. When the L0 normal reference picture of the P block is different from the additional reference picture of the P block, or the L1 normal reference picture of the P block is different from the additional reference picture of the P block, it may be determined that the normal reference picture and the additional reference picture of the P block are not the same.

When the normal reference picture and the additional reference picture of the P block are not the same, it may be determined whether the normal reference picture of the Q block and the additional reference picture of the P block are the same. When the L0 normal reference picture of the Q block is the same as the additional reference picture of the P block, or the L1 normal reference picture of the Q block is the same as the additional reference picture of the P block, the normal reference picture of the Q block and the additional reference picture of the P block may be determined to be the same.

When the normal reference picture of the Q block and the additional reference picture of the P block are the same (in particular, when the L0 normal reference picture of the Q block is the same as the additional reference picture of the P block), the BS may be determined as in the following Equation 11.

[Equation 11]

$$tmpBs = ((abs(mvQ0\_x - mvPi\_x) >= nTh2) \parallel (abs(mvQ0\_y - mvPi\_y) >= nTh2)) \ ? \ 1 : 0$$

In Equation 11, mvQ0_x and mvQ0_y may represent the x-component and y-component of the L0 normal motion vector of the Q block, respectively. mvPi_x and mvPi_y may represent the x-component and y-component of the additional motion vector of the P block, respectively. nTh2 may represent a threshold for determining BS. When either the difference between mvQ0_x and mvPi_x or the difference between mvQ0_y and mvPi_y is greater than or equal to nTh2, BS may be determined as 1. Otherwise (i.e., when both of the differences are less than nTh2), BS may be determined as 0.

When the normal reference picture of the Q block and the additional reference picture of the P block are the same (in particular, when the L1 normal reference picture of the Q block is the same as the additional reference picture of the P block), the BS may be determined as in the following Equation 12.

[Equation 12]

$$tmpBs = ((abs(mvQ1\_x - mvPi\_x) >= nTh2) \parallel (abs(mvQ1\_y - mvPi\_y) >= nTh2)) \ ? \ 1 : 0$$

In Equation 12, mvQ1_x and mvQ1_y may represent the x-component and y-component of the L1 normal motion vector of the Q block, respectively. mvPi_x and mvPi_y may represent the x-component and y-component of the additional motion vector of the P block, respectively. nTh2 may represent a threshold for determining BS. When either the difference between mvQ1_x and mvPi_x or the difference between mvQ1_y and mvPi_y is greater than or equal to nTh2, BS may be determined as 1. Otherwise (i.e., when both of the differences are less than nTh2), BS may be determined as 0.

On the other hand, when the normal reference picture of the Q block and the additional reference picture of the P block are determined to be different from each other, BS may be determined as 1.

The BS may be determined based on at least one of the Equations 6 to 12 described above, and the corresponding BS may be determined as the final BS.

Embodiment 2-D

The present disclosure defines an extended range for the BS of a deblocking filter, thereby enabling more precise application of the deblocking filter. The present disclosure may determine the BS as any one value within the extended range, and may subdivide the determination process of the deblocking filter for each step. According to the present disclosure, a range of 0 to 3 may be defined for the BS of the deblocking filter, and the BS may be determined as any one value within the range.

Specifically, it may be checked whether the P block and/or the Q block are blocks to which BDPCM is applied. When both the P block and the Q block are blocks to which BDPCM is applied, BS may be determined as 0. Otherwise, it may be checked whether the P block and/or the Q block are blocks coded in the intra mode or the CIIP mode (combined inter-intra prediction mode).

When the P block and/or the Q block are blocks coded in the intra mode or the CIIP mode, BS may be determined as 3. Otherwise, it may be checked whether at least one of a block edge corresponds to a transform unit edge or whether at least one of the P block or the Q block has a non-zero transform coefficient.

When a block edge corresponds to a transform unit edge, and at least one of the P block or Q block has a non-zero transform coefficient, BS may be determined as 2. Otherwise, it may be checked whether at least one of the following conditions 1 to 3 is satisfied.

(Condition 1) The prediction mode of the P block is different from the prediction mode of the Q block.

(Condition 2) Both the P block and the Q block are blocks coded in the IBC mode, and the difference between the block vectors of the P block and the Q block is greater than or equal to a threshold (e.g., 8).

(Condition 3) The reference picture of the P block and the reference picture of the Q block are different from each other, or the number of motion vectors for prediction of the P block and the number of motion vectors for prediction of the Q block are different from each other.

When at least one of the above conditions 1 to 3 is satisfied, BS may be determined as 2. When none of the above conditions 1 to 3 is satisfied, BS may be determined as 1 or 0. When none of the above conditions 1 to 3 is satisfied, it may be additionally checked whether the following condition 4 is satisfied.

(Condition 4) The difference between the motion vectors of the P block and the Q block is greater than or equal to a threshold (e.g., 8).

When the above condition 4 is satisfied, BS may be determined as 1. When the above condition 4 is not satisfied, BS may be determined as 0.

Embodiment 2-E

According to the present disclosure, a range of 0 to 4 may be defined for the BS of the deblocking filter, and the BS may be determined as any one value within the range.

Specifically, it may be checked whether the P block and/or the Q block are blocks to which BDPCM is applied. When both the P block and the Q block are blocks to which BDPCM is applied, BS may be determined as 0. Otherwise, it may be checked whether the P block and/or the Q block are blocks coded in the intra mode or the CIIP mode (combined inter-intra prediction mode).

When the P block and/or the Q block are blocks coded in the intra mode or the CIIP mode, BS may be determined as 4. Otherwise, it may be checked whether at least one of a block edge corresponds to a transform unit edge or whether at least one of the P block or the Q block has a non-zero transform coefficient.

When a block edge corresponds to a transform unit edge, and at least one of the P block or Q block has a non-zero transform coefficient, BS may be determined as 3. Otherwise, it may be checked whether the following condition 1 is satisfied.

(Condition 1) The prediction mode of the P block is different from the prediction mode of the Q block.

When the above condition 1 is satisfied, BS may be determined as 3. When the above condition 1 is not satisfied, BS may be determined as 2, 1, or 0. When the above condition 1 is not satisfied, it may be additionally checked whether the following condition 2 is satisfied.

(Condition 2) Both the P block and the Q block are blocks coded in the IBC mode, and the difference between the block vectors of the P block and the Q block is greater than or equal to a threshold (e.g., 8).

When the above condition 2 is satisfied, BS may be determined as 2. When the above condition 2 is not satisfied, BS may be determined as 2, 1, or 0. When the above condition 2 is not satisfied, it may be additionally checked whether the following condition 3 is satisfied.

(Condition 3) The reference picture of the P block and the reference picture of the Q block are different from each other, or the number of motion vectors for prediction of the P block and the number of motion vectors for prediction of the Q block are different from each other.

When the above condition 3 is satisfied, BS may be determined as 2. When the above condition 3 is not satisfied, BS may be determined as 1 or 0. When the above condition 3 is not satisfied, it may be additionally checked whether the following condition 4 is satisfied.

(Condition 4) The difference between the motion vectors of the P block and the Q block is greater than or equal to a threshold (e.g., 8).

When the above condition 4 is satisfied, BS may be determined as 1. When the above condition 4 is not satisfied, BS may be determined as 0.

Embodiment 2-F

The present disclosure relates to a method for determining a BS of a deblocking filter when OBMC is applied, through which subjective image quality may be improved. When OBMC is applied, a boundary between blocks (e.g., CU boundary, subblock boundary) is smoothed using motion information of the adjacent block, so that discontinuities between blocks may be removed. Therefore, when a deblocking filter is applied to a block to which OBMC is applied, a boundary between blocks may be excessively smoothed.

Specifically, it may be checked whether the P block and/or the Q block are blocks to which BDPCM or OBMC is applied. For example, when both the P block and the Q block are blocks to which OBMC is applied, BS may be determined as 0. Otherwise (i.e., when at least one of the P block or the Q block is a block to which OBMC is not applied), BS may be determined as 2, 1, or 0 based on whether the P block and/or the Q block are blocks coded in the intra mode or the CIIP mode. Alternatively, regardless of whether the P block is a block to which OBMC is applied, when the Q block is a block to which OBMC is applied, BS may be determined as 0. Otherwise (i.e., when the Q block is a block to which OBMC is not applied), BS may be determined as 2, 1, or 0 based on whether the P block and/or the Q block are blocks coded in the intra mode or the CIIP mode.

When the P block and/or the Q block are blocks coded in the intra mode or the CIIP mode, the BS may be determined as 2. Otherwise (i.e., when both the P block and the Q block are not blocks coded in the intra mode and the CIIP mode), it may be checked whether at least one of a block edge corresponds to a transform unit edge or whether at least one of the P block or the Q block has a non-zero transform coefficient.

When the block edge corresponds to a transform unit edge, and at least one of the P block or the Q block has a non-zero transform coefficient, BS may be determined as 1. Otherwise (i.e., when the block edge does not correspond to a transform unit edge, or both the P block and the Q block do not have a non-zero transform coefficient), it may be checked whether at least one of the following conditions 1 to 4 is satisfied.

(Condition 1) The prediction mode of the P block is different from the prediction mode of the Q block. Here, each of the P and Q blocks has one of a plurality of pre-defined prediction modes, and the plurality of prediction modes may include at least one of an intra mode, an inter mode, an IBC mode, or a palette mode.

(Condition 2) Both the P block and the Q block are blocks coded in the IBC mode, and the difference between the block vectors of the P block and the Q block is greater than or equal to a threshold (e.g., 8).

(Condition 3) The reference picture of the P block and the reference picture of the Q block are different from each other, or the number of motion vectors for prediction of the P block and the number of motion vectors for prediction of the Q block are different from each other.

(Condition 4) The difference between the motion vectors of the P block and the Q block is greater than or equal to a threshold (e.g., 8).

When at least one of the above conditions 1 to 4 is satisfied, BS may be determined as 1. When none of the above conditions 1 to 4 are satisfied, BS may be determined as 0. The method for determining BS depending on whether the above conditions 2 to 4 are satisfied is as described in Example 2-A.

Embodiment 2-G

The present disclosure relates to a method for determining a BS of a deblocking filter when OBMC is applied, through which subjective image quality may be improved. When OBMC is applied, a boundary between blocks (e.g., CU boundary, subblock boundary) is smoothed using motion information of the adjacent block, so that discontinuities between blocks may be removed. Therefore, when a deblocking filter is applied to a block to which OBMC is applied, a boundary between blocks may be excessively smoothed.

The present disclosure defines an extended range for the BS of a deblocking filter, thereby enabling more precise application of the deblocking filter. The present disclosure may determine the BS as any one value within the extended range, and may subdivide the determination process of the deblocking filter for each step. According to the present disclosure, a range of 0 to 4 may be defined for the BS of the deblocking filter, and the BS may be determined as any one value within the range.

Specifically, it may be checked whether the P block and/or the Q block are blocks to which BDPCM is applied. When both the P block and the Q block are blocks to which BDPCM is applied, BS may be determined as 0. Otherwise, it may be checked whether the P block and/or the Q block are blocks coded in the intra mode or the CIIP mode (combined inter-intra prediction mode).

When the P block and/or the Q block are blocks coded in the intra mode or the CIIP mode, BS may be determined as 4. Otherwise, it may be checked whether at least one of a block edge corresponds to a transform unit edge or whether at least one of the P block or the Q block has a non-zero transform coefficient.

When a block edge corresponds to a transform unit edge, and at least one of the P block or Q block has a non-zero transform coefficient, BS may be determined as 3. Otherwise, it may be checked whether the following condition 1 is satisfied.

(Condition 1) The prediction mode of the P block is different from the prediction mode of the Q block.

When the above condition 1 is satisfied, BS may be determined as 3. When the above condition 1 is not satisfied, BS may be determined as 2, 1, or 0. When the above condition 1 is not satisfied, it may be additionally checked whether the following condition 2 is satisfied.

(Condition 2) Both the P block and the Q block are blocks coded in the IBC mode, and the difference between the block vectors of the P block and the Q block is greater than or equal to a threshold (e.g., 8).

When the above condition 2 is satisfied, BS may be determined as 2. When the above condition 2 is not satisfied, BS may be determined as 2, 1, or 0. When the above condition 2 is not satisfied, it may be additionally checked whether the following condition 3 is satisfied.

(Condition 3) Both the P block and the Q block are not blocks to which OBMC is applied, and the reference picture of the P block is different from the reference picture of the Q block. Alternatively, both the P block and the Q block are not blocks to which OBMC is applied, and the number of motion vectors for prediction of the P block is different from the number of motion vectors for prediction of the Q block. Alternatively, The Q block is not a block to which OBMC is applied, and the reference picture of the P block is different from the reference picture of the Q block. Alternatively, The Q block is not a block to which OBMC is applied, and the number of motion vectors for prediction of the P block is different from the number of motion vectors for prediction of the Q block.

When the above condition 3 is satisfied, BS may be determined as 2. When the above condition 3 is not satisfied, BS may be determined as 1 or 0. When the above condition 3 is not satisfied, it may be additionally checked whether the following condition 4 is satisfied.

(Condition 4) The difference between the motion vectors of the P block and the Q block is greater than or equal to a threshold (e.g., 8).

When the above condition 4 is satisfied, BS may be determined as 1. When the above condition 4 is not satisfied, BS may be determined as 0.

Referring to Fig. 4, based on the filter length and BS of the deblocking filter, a deblocking filter having a predetermined type and strength may be determined (S420).

Specifically, based on at least one of the sample variation within a block or the sample variation at an edge between blocks, it may be determined whether the edge corresponds to an actual edge of the block or an edge caused by a blocking artifact. The type and/or strength of the deblocking filter may be determined based on the determination. As examples of the type of the deblocking filter, a short filter, a long filter, etc. may be used. As examples of the strength of the deblocking filter, a strong filter, a weak filter, etc. may be used.

The above deblocking filter may be determined based on a predetermined variable (e.g., $\beta$, tc). The predetermined variable may be compared with at least one of the sample variation within the Q block and the P block or the sample variation at the edge, and thereby the type and/or strength of the deblocking filter may be determined.

The variables $\beta$ and tc may be calculated based on the offset for each variable (e.g., qpOffset, sh_luma_beta_offset div2, sh_luma_tc_offset div2) and the quantization parameter (Qp) of the Q/P block. For example, the variables $\beta$ and tc may be calculated as in the following Equation 13 and Table 1.

[Equation 13]

$$qP = ((Qp_Q + Qp_P + 1) >> 1) + qpOffset$$

$$Q = Clip3(0, 63, qP + (sh\_luma\_beta\_offset\_div2 << 1))$$

$$\beta = \beta'* (1 << (BitDepth - 8))$$

$$Q = Clip3(0, 65, qP + 2*(BS - 1) + (sh\_luma\_tc\_offset\_div2 << 1))$$

$$t_C = t_C'* (1 << (BitDepth - 10))$$

[Table 1]

| Q | 0 | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| β' | 0 | 0 | 0 | 0 | 0 | 0 | 0 | 0 | 0 | 0 | 0 | 0 | 0 | 0 | 0 | 0 | 6 |
| $t_C$' | 0 | 0 | 0 | 0 | 0 | 0 | 0 | 0 | 0 | 0 | 0 | 0 | 0 | 0 | 0 | 0 | 0 |
| Q | 17 | 18 | 19 | 20 | 21 | 22 | 23 | 24 | 25 | 26 | 27 | 28 | 29 | 30 | 31 | 32 | 33 |
| β' | 7 | 8 | 9 | 10 | 11 | 12 | 13 | 14 | 15 | 16 | 17 | 18 | 20 | 22 | 24 | 26 | 28 |
| $t_C$' | 0 | 3 | 4 | 4 | 4 | 4 | 5 | 5 | 5 | 5 | 7 | 7 | 8 | 9 | 10 | 10 | 11 |
| Q | 34 | 35 | 36 | 37 | 38 | 39 | 40 | 41 | 42 | 43 | 44 | 45 | 46 | 47 | 48 | 49 | 50 |
| β' | 30 | 32 | 34 | 36 | 38 | 40 | 42 | 44 | 46 | 48 | 50 | 52 | 54 | 56 | 58 | 60 | 62 |
| $t_C$' | 13 | 14 | 15 | 17 | 19 | 21 | 24 | 25 | 29 | 33 | 36 | 41 | 45 | 51 | 57 | 64 | 71 |
| Q | 51 | 52 | 53 | 54 | 55 | 56 | 57 | 58 | 59 | 60 | 61 | 62 | 63 | 64 | 65 | | |
| β' | 64 | 66 | 68 | 70 | 72 | 74 | 76 | 78 | 80 | 82 | 84 | 86 | 88 | - | - | | |
| $t_C$' | 80 | 89 | 100 | 112 | 125 | 141 | 157 | 177 | 198 | 222 | 250 | 280 | 314 | 352 | 395 | | |

In Equation 13, $Qp_Q$ and $Qp_P$ may mean the quantization parameters of the Q block and the P block, respectively. In Equation 13, qpOffset may be derived as in Table 2 below.

[Table 2]

- If sps_ladf_enabled_flag is equal to 1, the following applies:
  - The variable lumaLevel of the reconstructed luma level is derived as follows:
    lumaLevel = ( ( $p_{0,0}$ + $p_{0,3}$ + $q_{0,0}$ + $q_{0,3}$ ) >> 2 )
  - The variable qpOffset is set equal to sps_ladf_lowest_interval_qp_offset and modified as follows:
    for( i = 0; i < sps_num_ladf_intervals_minus2 + 1; i++ ) {
      if( lumaLevel > SpsLadfIntervalLowerBound[ i + 1 ] )
        qpOffset = sps_ladf_qp_offset[ i ]
      else
        break
    }
- Otherwise, qpOffset is set equal to 0.

The semantics of the above syntax elements (sps_ladf_qp_offset, sh_luma_beta_offset_div2, sh_luma_tc_offset_div2) are as in Table 3 below.

[Table 3]

**sps_ladf_qp_offset[** i ] specifies the offset array used to derive the variable qP as specified in clause 8.8.3.6.2. The value of sps_ladf_qp_offset[ i ] shall be in the range of -63 to 63, inclusive.
**sh_luma_beta_offset_div2** and **sh_luma_tc_offset_div2** specify the deblocking parameter offsets for β and tC (divided by 2) that are applied to the luma component for the current slice. The values of sh_luma_beta_offset div2 and sh_luma_tc_offset_div2 shall both be in the range of -12 to 12, inclusive. When not present, the values of sh_luma_beta_offset_div2 and sh_luma_tc_offset_div2 are inferred to be equal to ph_luma_beta_offset_div2 and ph_luma_tc_offset_div2, respectively.

When the range of BS is changed, the variables β and tc may be changed as follows. For example, when the range of 0 to 3 is defined for the BS of the deblocking filter, the variables β and tc may be changed as in Equation 14. When the range of 0 to 2 is defined, the variation of Q by BS becomes 2, 0, -2. On the other hand, when the range of 0 to 3 is defined, it may be applied by changing the variation of Q by BS to 3, 1, -1, -3.

[Equation 14]

$$qP = ((Qp_Q + Qp_P + 1) >> 1) + qpOffset$$
$$Q = Clip3(0, 63, qP + (sh\_luma\_beta\_offset\_div2 << 1))$$
$$\beta = \beta'* (1 << (BitDepth - 8))$$

$$Q = Clip3(0, 65, qP + (2*(BS - 1)) - 1 + (sh\_luma\_tc\_offset\_div2 << 1))$$
$$t_C = t_C'* (1 << (BitDepth - 10))$$

Alternatively, when a range of 0 to 4 is defined for the BS of the deblocking filter, the variables β and tc may be changed as in Equation 15. When a range of 0 to 4 is defined, it may be applied by changing the variation of Q by BS to 4, 2, 0, - 2, -4.

[Equation 15]

$$qP = ((Qp_Q + Qp_P + 1) >> 1) + qpOffset$$
$$Q = Clip3(0, 63, qP + (sh\_luma\_beta\_offset\_div2 << 1))$$
$$\beta = \beta'* (1 << (BitDepth - 8))$$
$$Q = Clip3(0, 65, qP + (2*(BS - 1)) - 2 + (sh\_luma\_tc\_offset\_div2 << 1))$$
$$t_C = t_C'* (1 << (BitDepth - 10))$$

Alternatively, when a range of 0 to 3 or a range of 0 to 4 is defined for the BS of the deblocking filter, the variables β and tc may be changed as in Equation 16. When a range of 0 to 3 or a range of 0 to 4 is defined, it may be applied by changing the variation of Q by BS to 3, 2, 1, 0 or 4, 3, 2, 1, which are the same as the value of BS.

[Equation 16]

$$qP = ((Qp_Q + Qp_P + 1) >> 1) + qpOffset$$
$$Q = Clip3(0, 63, qP + (sh\_luma\_beta\_offset\_div2 << 1))$$
$$\beta = \beta'* (1 << (BitDepth - 8))$$
$$Q = Clip3(0, 65, qP + BS + (sh\_luma\_tc\_offset\_div2 << 1))$$
$$t_C = t_C'* (1 << (BitDepth - 10))$$

As described above, the value of Q in Table 1 may be adjusted according to the value of BS. Alternatively, the mapping table between Q and variables β and tc may be adjusted more finely.

Referring to FIG. 4, the current picture may be updated by applying a deblocking filter to a block boundary within the current picture (S430).

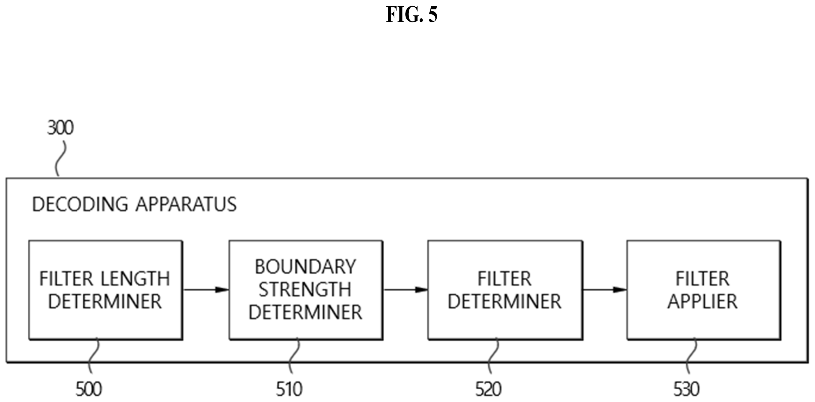

FIG. 5 illustrates a schematic configuration of a decoding apparatus (300) that performs an image decoding method according to the present disclosure.

Referring to FIG. 5, the decoding apparatus (300) may include a filter length determiner (500), a boundary strength determiner (510), a filter determiner (520), and a filter applier (530).

The filter length determiner (500) may determine the filter length of the deblocking filter. The filter length determiner

(500) may determine the filter length of the deblocking filter based on the filter length determining method described with reference to FIG. 4, and any duplicate description will be omitted here.

The boundary strength determiner (510) may determine the boundary strength (BS) of the deblocking filter. The boundary strength determiner (510) may determine the BS of the deblocking filter based on the BS determination method described with reference to FIG. 4, and any duplicate description will be omitted here.

The filter determiner (520) may determine a deblocking filter having a predetermined type and strength based on the filter length and BS of the deblocking filter. Here, the deblocking filter may be determined based on predetermined variables (e.g., β, tc), and the method of deriving the variables is as described with reference to FIG. 4.

The filter applier (530) may update the current picture by applying a deblocking filter to a block boundary within the current picture.

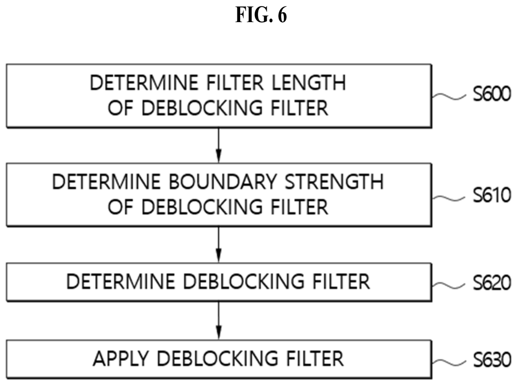

FIG. 6 illustrates an image encoding method performed in an encoding apparatus (200) according to the present disclosure.

Referring to Fig. 6, the filter length of the deblocking filter may be determined (S600). The method for determining the filter length of the deblocking filter is as described with reference to Fig. 4.

Referring to Fig. 6, the boundary strength (BS) of the deblocking filter may be determined (S610). The BS determination method is as described with reference to Fig. 4.

Referring to Fig. 6, based on the filter length and BS of the deblocking filter, a deblocking filter having a predetermined type and strength may be determined (S620). Here, the deblocking filter may be determined based on predetermined variables (e.g., $\beta$, tc), and the method of deriving the variables is as described with reference to Fig. 4.

Referring to FIG. 6, a deblocking filter may be applied to a block boundary within the current picture to modify the current picture (S630). The modified current picture may be stored in a memory (270) within the encoding apparatus (200) and may be referenced for inter prediction of another picture.

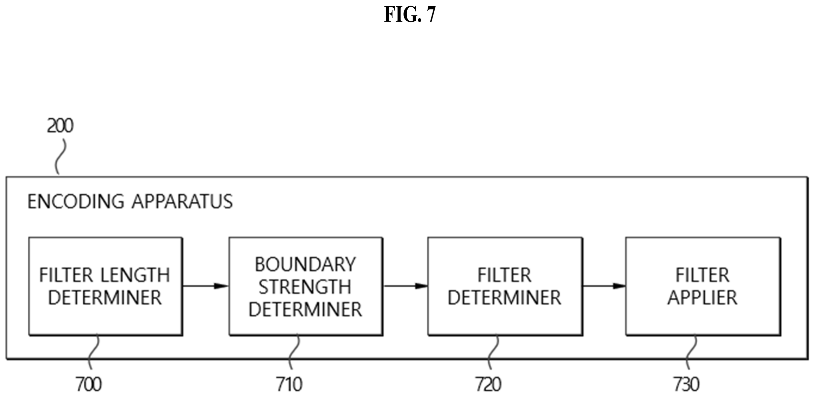

FIG. 7 illustrates a schematic configuration of an encoding apparatus (200) that performs an image encoding method according to the present disclosure.

Referring to FIG. 7, the encoding apparatus (200) may include a filter length determiner (700), a boundary strength determiner (710), a filter determiner (720), and a filter applier (730).

The filter length determiner (700) may determine the filter length of the deblocking filter. The filter length determiner

(700) may determine the filter length of the deblocking filter based on the filter length determination method described with reference to FIG. 4, and any duplicate description will be omitted here.

The boundary strength determiner (710) may determine the boundary strength (BS) of the deblocking filter. The boundary strength determiner (710) may determine the BS of the deblocking filter based on the BS determination method described with reference to FIG. 4, and redundant descriptions will be omitted here.

The filter determiner (720) may determine a deblocking filter having a predetermined type and strength based on the filter length and BS of the deblocking filter. Here, the deblocking filter may be determined based on predetermined variables (e.g., $\beta$, tc), and the method of deriving the variables is as described with reference to FIG. 4.

The filter applier (730) may modify the current picture by applying the deblocking filter to the block boundary in the current picture.

In the above-described embodiment, methods are described based on a flowchart as a series of steps or blocks, but a corresponding embodiment is not limited to the order of steps, and some steps may occur simultaneously or in different order with other steps as described above. In addition, those skilled in the art may understand that steps shown in a flowchart are not exclusive, and that other steps may be included or one or more steps in a flowchart may be deleted without affecting the scope of embodiments of the present disclosure.

The above-described method according to embodiments of the present disclosure may be implemented in a form of software, and an encoding apparatus and/or a decoding apparatus according to the present disclosure may be included in a device which performs image processing such as a TV, a computer, a smartphone, a set top box, a display device, etc.

In the present disclosure, when embodiments are implemented as software, the above-described method may be implemented as a module (a process, a function, etc.) that performs the above-described function. A module may be stored in a memory and may be executed by a processor. A memory may be internal or external to a processor, and may be connected to a processor by a variety of well-known means. A processor may include an application-specific integrated circuit (ASIC), another chipset, a logic circuit and/or a data processing device. A memory may include a read-only memory (ROM), a random access memory (RAM), a flash memory, a memory card, a storage medium and/or another storage device. In other words, embodiments described herein may be performed by being implemented on a processor, a microprocessor, a controller or a chip. For example, functional units shown in each drawing may be performed by being implemented on a computer, a processor, a microprocessor, a controller or a chip. In this case, information for implementation (ex. information on instructions) or an algorithm may be stored in a digital storage medium.

In addition, a decoding apparatus and an encoding apparatus to which embodiment(s) of the present disclosure are applied may be included in a multimedia broadcasting transmission and reception device, a mobile communication terminal, a home cinema video device, a digital cinema video device, a surveillance camera, a video conversation device, a real-time communication device like a video communication, a mobile streaming device, a storage medium, a camcorder, a device for providing video on demand (VoD) service, an over the top video (OTT) device, a device for providing Internet streaming service, a three-dimensional (3D) video device, a virtual reality (VR) device, an argumente reality (AR) device, a video phone video device, a transportation terminal (ex. a vehicle (including an autonomous vehicle) terminal, an airplane terminal, a ship terminal, etc.) and a medical video device, etc., and may be used to process a video signal or a data signal. For example, an over the top video (OTT) device may include a game console, a blu-ray player, an Internet-connected TV, a home theater system, a smartphone, a tablet PC, a digital video recorder (DVR), etc.

In addition, a processing method to which embodiment(s) of the present disclosure are applied may be produced in a form of a program executed by a computer and may be stored in a computer-readable recording medium. Multimedia data having a data structure according to embodiment(s) of the present disclosure may be also stored in a computer-readable recording medium. The computer-readable recording medium includes all types of storage devices and distributed storage devices that store computer-readable data. The computer-readable recording medium may include, for example, a blu-ray disk (BD), an universal serial bus (USB), ROM, PROM, EPROM, EEPROM, RAM, CD-ROM, a magnetic tape, a floppy disk and an optical media storage device. In addition, the computer-readable recording medium includes media implemented in a form of a carrier wave (e.g., transmission via the Internet). In addition, a bitstream generated by an encoding method may be stored in a computer-readable recording medium or may be transmitted through a wired or wireless communication network.

In addition, embodiment(s) of the present disclosure may be implemented by a computer program product by a program code, and the program code may be executed on a computer by embodiment(s) of the present disclosure. The program code may be stored on a computer-readable carrier.

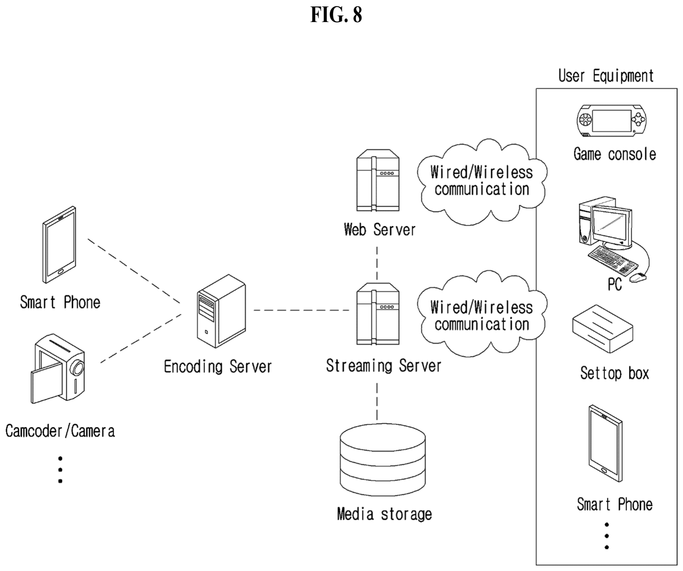

FIG. 8 shows an example of a contents streaming system to which embodiments of the present disclosure may be applied.

Referring to FIG. 8, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

**Claims**

1.  A method for decoding an image, comprising:

    determining a filter length of a deblocking filter applied to a block boundary between a first block and a second block in a current picture;
    determining a boundary strength of the deblocking filter;
    determining the deblocking filter having a predetermined type and strength based on the filter length and the boundary strength; and
    applying the deblocking filter to the block boundary between the first block and the second block,
    wherein the filter length of the deblocking filter is determined based on whether multi-reference prediction is applied to at least one of the first block or the second block.

2.  The method of claim 1, wherein the filter length of the deblocking filter is determined based on at least one of a size of the second block or whether the second block is a block coded in a subblock-based inter prediction mode.

3. The method of claim 1, wherein the boundary strength is determined based on whether a number of multiple reference blocks for the first block is the same as a number of multiple reference blocks for the second block.

4. The method of claim 1, wherein the boundary strength is determined based on a weight for the multi-reference prediction.

5. The method of claim 1, wherein when the multi-reference prediction is applied to the second block, the boundary strength is determined based on whether a picture to which a normal reference block of the second block belongs is the same as a picture to which an additional reference block of the second block belongs.

6. The method of claim 1, wherein when the multi-reference prediction is applied to the second block, the boundary strength is determined based on whether a picture to which an additional reference block of the second block belongs is the same as a picture to which a normal reference block of the first block belongs.

7. The method of claim 1, wherein when the multi-reference prediction is applied to the second block, the boundary strength is determined based on a difference between a motion vector related to an additional reference block of the second block and a motion vector related to a normal reference block of the first block.

8. The method of claim 1, wherein when the multi-reference prediction is applied to the second block, the boundary strength is determined based on a difference between a motion vector related to a normal reference block of the second block and a motion vector related to an additional reference block of the first block.

9. The method of claim 1, wherein a pre-defined maximum value for the boundary strength is 3 or 4.

10. A method for encoding an image, comprising:

   determining a filter length of a deblocking filter applied to a block boundary between a first block and a second block in a current picture;
   determining a boundary strength of the deblocking filter;
   determining the deblocking filter having a predetermined type and strength based on the filter length and the boundary strength; and
   applying the deblocking filter to the block boundary between the first block and the second block,
   wherein the filter length of the deblocking filter is determined based on whether multi-reference prediction is applied to at least one of the first block or the second block.

11. A computer-readable storage medium storing a bitstream generated by an image encoding method according to claim 10.

12. A method of transmitting data, comprising:

   obtaining a bitstream for image information, wherein the bitstream is generated by determining a filter length of a deblocking filter applied to a block boundary between a first block and a second block in a current picture, determining a boundary strength of the deblocking filter, determining the deblocking filter having a predetermined type and strength based on the filter length and the boundary strength, and applying the deblocking filter to the block boundary between the first block and the second block; and
   transmitting the data including the bitstream,
   wherein the filter length of the deblocking filter is determined based on whether multi-reference prediction is applied to at least one of the first block or the second block.

**FIG.1**

# FIG.2

EP 4 648 424 A1

**FIG.3**

**FIG.4**

```
┌─────────────────────────────────┐
│   DETERMINE FILTER LENGTH       │ ～ S400
│   OF DEBLOCKING FILTER          │
└─────────────────────────────────┘
                │
                ▼
┌─────────────────────────────────┐
│  DETERMINE BOUNDARY STRENGTH    │ ～ S410
│     OF DEBLOCKING FILTER        │
└─────────────────────────────────┘
                │
                ▼
┌─────────────────────────────────┐
│   DETERMINE DEBLOCKING FILTER   │ ～ S420
└─────────────────────────────────┘
                │
                ▼
┌─────────────────────────────────┐
│    APPLY DEBLOCKING FILTER      │ ～ S430
└─────────────────────────────────┘
```

# FIG. 5

300

## DECODING APPARATUS

| FILTER LENGTH DETERMINER | → | BOUNDARY STRENGTH DETERMINER | → | FILTER DETERMINER | → | FILTER APPLIER |

500      510      520      530

**FIG. 6**

```
┌────────────────────────────────┐
│   DETERMINE FILTER LENGTH      │
│    OF DEBLOCKING FILTER        │──── S600
└────────────────────────────────┘
              │
              ▼
┌────────────────────────────────┐
│  DETERMINE BOUNDARY STRENGTH   │
│    OF DEBLOCKING FILTER        │──── S610
└────────────────────────────────┘
              │
              ▼
┌────────────────────────────────┐
│   DETERMINE DEBLOCKING FILTER  │──── S620
└────────────────────────────────┘
              │
              ▼
┌────────────────────────────────┐
│    APPLY DEBLOCKING FILTER     │──── S630
└────────────────────────────────┘
```

**FIG. 7**

200

ENCODING APPARATUS

| FILTER LENGTH DETERMINER | → | BOUNDARY STRENGTH DETERMINER | → | FILTER DETERMINER | → | FILTER APPLIER |

700        710        720        730

**FIG. 8**

## INTERNATIONAL SEARCH REPORT

| International application No. |
|---|
| **PCT/KR2024/000207** |

**A. CLASSIFICATION OF SUBJECT MATTER**

**H04N 19/86**(2014.01)i; **H04N 19/82**(2014.01)i; **H04N 19/513**(2014.01)i; **H04N 19/105**(2014.01)i; **H04N 19/176**(2014.01)i

According to International Patent Classification (IPC) or to both national classification and IPC

**B. FIELDS SEARCHED**

Minimum documentation searched (classification system followed by classification symbols)

H04N 19/86(2014.01); H04N 19/107(2014.01); H04N 19/117(2014.01); H04N 19/184(2014.01); H04N 19/593(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 디블록킹(deblocking), 필터(filter), 강도(strength), 길이 (length), 모드(mode)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2022-0072814 A (ELECTRONICS AND TELECOMMUNICATIONS RESEARCH INSTITUTE et al.) 02 June 2022 (2022-06-02) See paragraphs [0010], [0020], [0034]-[0040] and [0046]; and claims 1-2. | 1-12 |
| Y | WO 2020-147805 A1 (BEIJING BYTEDANCE NETWORK TECHNOLOGY CO., LTD. et al.) 23 July 2020 (2020-07-23) See paragraph [0166]; and claims 1, 5 and 10-11. | 1-12 |
| Y | KR 10-2020-0145748 A (ELECTRONICS AND TELECOMMUNICATIONS RESEARCH INSTITUTE) 30 December 2020 (2020-12-30) See claim 6. | 7-8 |
| A | KR 10-2021-0018470 A (HUAWEI TECHNOLOGIES CO., LTD.) 17 February 2021 (2021-02-17) See paragraphs [0156]-[0162]; and claims 1-18. | 1-12 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 April 2024** | **08 April 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/000207** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2022-0049520 A (BEIJING BYTEDANCE NETWORK TECHNOLOGY CO., LTD. et al.) 21 April 2022 (2022-04-21)<br>See claims 1-7. | 1-12 |

Form PCT/ISA/210 (second sheet) (July 2022)

## INTERNATIONAL SEARCH REPORT
### Information on patent family members

International application No.

**PCT/KR2024/000207**

| Patent document cited in search report | | | Publication date (day/month/year) | Patent family member(s) | | | Publication date (day/month/year) |
|---|---|---|---|---|---|---|---|
| KR | 10-2022-0072814 | A | 02 June 2022 | CN | 107105271 | A | 29 August 2017 |
| | | | | CN | 107105271 | B | 09 October 2020 |
| | | | | EP | 3905678 | A1 | 03 November 2021 |
| | | | | JP | 2023-053247 | A | 12 April 2023 |
| | | | | JP | 7242477 | B2 | 20 March 2023 |
| | | | | KR | 10-2023-0098117 | A | 03 July 2023 |
| | | | | KR | 10-2548737 | B1 | 29 June 2023 |
| | | | | US | 11849110 | B2 | 19 December 2023 |
| | | | | US | 2022-0224896 | A1 | 14 July 2022 |
| | | | | WO | 2011-139121 | A2 | 10 November 2011 |
| | | | | WO | 2011-139121 | A3 | 08 March 2012 |
| WO | 2020-147805 | A1 | 23 July 2020 | CN | 113302919 | A | 24 August 2021 |
| | | | | CN | 113316933 | A | 27 August 2021 |
| | | | | US | 11483550 | B2 | 25 October 2022 |
| | | | | US | 2021-0235073 | A1 | 29 July 2021 |
| | | | | WO | 2020-147804 | A1 | 23 July 2020 |
| KR | 10-2020-0145748 | A | 30 December 2020 | CN | 114270865 | A | 01 April 2022 |
| | | | | US | 2022-0312005 | A1 | 29 September 2022 |
| | | | | WO | 2020-256491 | A1 | 24 December 2020 |
| KR | 10-2021-0018470 | A | 17 February 2021 | CN | 113170143 | A | 23 July 2021 |
| | | | | CN | 113170143 | B | 02 January 2024 |
| | | | | JP | 2023-090864 | A | 29 June 2023 |
| | | | | JP | 7275270 | B2 | 17 May 2023 |
| | | | | KR | 10-2023-0165354 | A | 05 December 2023 |
| | | | | KR | 10-2606414 | B1 | 24 November 2023 |
| | | | | US | 11895292 | B2 | 06 February 2024 |
| | | | | WO | 2020-114513 | A1 | 11 June 2020 |
| KR | 10-2022-0049520 | A | 21 April 2022 | CN | 114270848 | A | 01 April 2022 |
| | | | | CN | 114868391 | A | 05 August 2022 |
| | | | | EP | 4005206 | A1 | 01 June 2022 |
| | | | | JP | 2022-545276 | A | 26 October 2022 |
| | | | | JP | 2023-123713 | A | 05 September 2023 |
| | | | | JP | 7305878 | B2 | 10 July 2023 |
| | | | | US | 11438585 | B2 | 06 September 2022 |
| | | | | US | 2022-0394248 | A1 | 08 December 2022 |
| | | | | WO | 2021-036981 | A1 | 04 March 2021 |

Form PCT/ISA/210 (patent family annex) (July 2022)